# EUROPEAN PATENT APPLICATION

(11) **EP 1 267 557 A1**
(43) Date of publication of application: **18.12.2002**
(21) Application number: 02250071.4
(22) Date of filing: 07.01.2002
(51) Int. Cl.: H04M 3/54

(54) **Caller selection of an alternate call destination when called terminal is unavailable**

(30) Priority: 11.06.2001 US 878508
(71) Applicant: LUCENT TECHNOLOGIES INC., Murray Hill, New Jersey 07974-0636 (US)
(72) Inventor: Bushnell, William Jackson, St. Charles, Illinois 60174 (US)
(74) Representative: Buckley, Christopher Simon Thirsk

(57) **Abstract**

A system for providing alternate point of contact (APOC) information to a caller when a called station/terminal is unavailable includes a call processing element, a database of APOC information, and means for presenting to the caller one or more APOCs. The service may be provided by a call processing element serving the calling subscriber terminal or a call processing element serving the called subscriber terminal. The information may be presented using a display or a voice announcement. Optionally, the caller may select which, among several candidate APOCs, the caller wishes to be connected to. The APOC information may be stored in a call processing element, an intelligent network services control point, or some other database server.

## Description

The present invention relates to telecommunications, networks, systems and methods, and more particularly to systems and methods for providing alternate call destination options when an initial call attempt is unsuccessful.

### Background Of The Invention

In current telecommunications networks, many call attempts are unsuccessful. Often, the called station is busy or does not answer. Although this has always been a problem for callers, the problem has been exacerbated recently by a variety of economic, social, and business conditions. As a result of economic pressures, globalization, and other factors, peoples' work patterns and locations have changed. Many people work irregular schedules, and work at times different from geographically diverse colleagues. Accordingly, the schedules of calling and called parties more often than ever do not coincide. Also, in order to save costs, many organizations have shifted from providing a live attendant to answer calls to busy or no-answer stations to technological aids, such as voice mail.

Although voice mail and other such aids can be extremely useful, they do not satisfy the caller's need to communicate, which prompted the call. On many occasions, the caller has a message or inquiry which is very important or time sensitive. Also on many occasions, the caller often does not need to speak with the particular person being called, but could instead accomplish the intended purpose by speaking with some other person in the called party's company, department or workgroup. In some environments, the caller may even be satisfied by being placed in contact with an entirely different company or organization than the one originally called. For example, a person needing emergency service of some sort, such as plumbing or road service, may be interested in speaking to any available nearby service provider if the initially-called provider is unavailable.

However, it is often very difficult for the caller to identify and call an alternate point of contact. For example, when calling an unavailable party who is a member of a large organization, the caller may simply not be aware of the other members of the organization who may be suitable contacts. For another example, when calling a service provider who is unavailable, a caller may not be aware of other providers of equivalent services.

Certain voice mail systems include a feature by which a caller may request a transfer to another party. Such features typically permit the caller to request a transfer by specifying either: (1) an extension or directory number, which the caller must know in advance; (2) a party name, which the caller must also know in advance; or (3) an secretary, attendant, operator, or message center. Although the first two capabilities may be very useful in some circumstances, they do not assist a caller who does not happen to know the telephone number or identify of an alternate point of contact. The third capability is only useful if the attendant number has been defined, and if the attendant is available. Unfortunately, many subscribers do not have a secretary or message center assigned to receive calls when the subscriber is unavailable. Further, even when a subscriber has an assigned secretary or message center, the voice mail transfer feature may not have been provisioned to allow a caller to request a transfer. And even when the feature is correctly provisioned, the secretary or message center may not be available at the time of the call, as such services typically operate only during limited hours. Moreover, the secretary or message center may not be able or authorized to discuss the subject matter the caller wishes to discuss.

Accordingly, there is a need for systems and methods for use in conjunction with telecommunications systems to assist a caller in determining and calling an alternate point of contact when a called party is unavailable.

### Object And Summary Of The Invention

It is therefore an object of the present invention to provide a system and methods for use in conjunction with telecommunications networks that avoid or minimize the aforementioned disadvantages of the prior art.

In an exemplary embodiment of a telecommunications system constructed according to the present invention, when a call is placed by an appropriate subscriber to an unavailable called party or station, the system provides to the caller a list of alternate points of contact (APOC). The alternate points of contact are preferably selected to be useful based on the context of the call, which may include, for example, the caller's identity and role, the called party's identity and role, and the called party's company or organization. For example, the alternate points of contact for a called party within a corporation, government agency, or other large organization, might include other members of that party's department. The alternate points of contact could also include other persons the caller has called recently at that corporation, agency, or organization. These and any other sources of alternate points of contact could be used in any suitable combination useful to the caller. For other called parties, such as retail businesses, the alternate points of contact may include, for example, other retail businesses of the same type or category. The caller may select a member of the list and the telecommunications system will attempt to transfer the call to that person.

According to an aspect of the present invention, a first exemplary embodiment is adapted for use in the environment of a primarily circuit-based telecommunications network, in which a switching system serving a calling station/terminal is primarily responsible for controlling an alternate point-of-contact service. A calling station/terminal is operatively connected to and served by a first switching system or equivalent means for processing and switching calls and providing call features to the calling station. The switch serving the calling station is referred to herein as the "calling switch." The calling switch is connected to a public or private network including at least facilities capable of carrying voice calls and concomitant signaling traffic. A called station/terminal is also connected to the voice-capable network. The calling switch is also connected to a Services Control Point (SCP) or other intelligent network element. In this embodiment, the APOC services are provided and controlled by or through the calling switch, in cooperation with intelligent network elements, and the APOC services which are provided depend on features of the caller's subscription.

The calling switch may also be connected to an optional interactive voice response (IVR) system. The SCP and the IVR may be connected to a suitable directory server (DS) where directory information used to produce a list of appropriate alternate points of contact is stored. An administrative server and an administrative terminal may be provided to manage the contents and operation of the directory server. An optional display may provided for use by the user of the calling station/terminal. The display may be directly connected to the calling station/terminal or may be operatively connected to the calling switch, SCP, and/or DS. These elements and the administrative server may be interconnected using one or more networks capable of carrying data or signaling traffic.

In operation, a call to an unavailable called station/terminal is detected by the calling switch. If the caller subscribes to the APOC service, the switch consults the SCP to determine what further treatment should be applied to the call. The SCP may consult the directory server to obtain APOC information, as appropriate for the service to which the caller subscribes and the context of the call. Alternatively, the SCP may use information stored locally, or a combination of information stored locally and information obtained from the directory server, to derive the APOC information.

If a display is available for use at the calling station/terminal, it may be employed to present the APOC information to the caller and to prompt the caller for a selection of one of the APOCs to be used as an alternate destination for the call. If a display is not available for use at the calling station/terminal, the information may be transmitted to the IVR system, and that system may be employed to present the APOC information to the caller and obtain a selection. The caller may make a selection of an APOC (or indicate that none of the APOCs presented should be used), using the keypad or other input device associated with the calling station/terminal. If a separate display is provided and the display has an input device, the caller may also indicate an APOC selection using that device.

The caller's APOC choice is returned to the calling switch. If the caller has selected an APOC, the switch extends the call to the directory number associated with the selected APOC. If the caller has indicated that no APOC is to be used, then the call receives appropriate call treatment selected depending on the condition of the called line and the features to which the called party subscribes. For example, the call may be forwarded to a voice mail system, if available, or the call may receive a busy tone or announcement.

According to an aspect of the present invention, a second exemplary embodiment 200 is adapted for use in the environment of a primarily circuit-based telecommunications network, in which a switching system serving a called station/terminal is primarily responsible for controlling an alternate point-of-contact service. The second embodiment may be particularly useful in non-public networks, as might be found in a corporation, government agency, or other organization; but could still be useful in public networks as well. A calling station/terminal is connected to a terminating switching system (or equivalent means for processing and switching calls) via a voice-bearing network. A called station/terminal is also connected to the terminating switch via the voice-bearing network. The voice-bearing network, a voice mail system, and an interactive voice response (IVR) system are also connected to the terminating switch. A directory server is connected to the IVR system. Although the voice mail and the IVR systems are shown as separate components, their functionality may be combined in a single unit.

Although shown in the drawings herein as a single network, the voice-bearing network may incorporate elements of the public switched telephone network and one or more private networks. In the second exemplary embodiment, the APOC services are controlled by a switching system associated with the called terminal (or other elements of the terminating network), and the particular services available can vary according to features to which the calling party and the called party may independently subscribe. Accordingly, any caller to the called station/terminal may receive APOC services even though the calling party may not subscribe to APOC services.

In operation, a call to an unavailable called station/terminal is detected by the terminating switch. If the called party subscribes to the APOC service, the switch attaches the IVR to the call and sends information needed by the IVR to obtain APOC information from the directory server. Alternatively, the terminating switch may employ information stored locally, or a combination of information stored locally and information obtained from the directory server, to derive the APOC information. The IVR presents the APOC information to the caller, prompts the caller for a selection, and reports the selection to the switch. If a display is available at the calling station/terminal, and if a network path capable of transferring information to the display is available, the display may be used to present the APOC information to the caller. In that case, the switch may communicate directly with the directory server, or an element having functions similar to a Services Control Point may be used in place of the IVR system.

The caller's APOC choice is returned to the terminating switch. If the caller has selected an APOC, the switch extends the call to the directory number associated with the selected APOC. If the caller has indicated that no APOC is to be used, then the call receives appropriate call treatment selected depending on the condition of the called line and the features to which the called party subscribes.

According to an aspect of the present invention, a third exemplary embodiment is adapted for use in the environment of a primarily packet-based telecommunications network. A calling station/terminal is operatively connected (e.g., via the network described below) to a calling gateway feature server (GFS) or equivalent means for processing and switching calls and providing call features to the calling station. The calling GFS is connected to a public or private network including facilities capable of carrying voice calls, concomitant call setup and signaling traffic, and certain data traffic. A called station/terminal is operatively connected (e.g. via the network) to a "called" gateway feature server (GFS) or equivalent means for processing and switching calls and providing call features to the called station. The called GFS is also connected to the network. The call switching and packet routing functions in a packet network may be distributed throughout the network. An Interactive Voice Processing (IVP) server and a directory server are also connected to the network. In this embodiment, the APOC services may be provided and controlled by or through either the calling GFS, the called GFS, or some combination thereof. Accordingly, the APOC services which are provided may depend on features of either or both of the calling and called parties' subscriptions.

In operation, a call to an unavailable station/terminal is detected by one of the GFSs which is serving the call and which is assigned to provide APOC services. If a display is available at the calling station/terminal, the GFS may request APOC information directly from the directory server (or from local storage resources) and transmit it to the display for presentation to the caller. If a display is not available at the calling station/terminal, the GFS requests APOC information from the directory server (or local storage resources) and forwards it to the IVP server. The GFS attaches the IVP server to the call, and the IVP server presents the APOC information to the caller. The IVP server receives the user's APOC selection and forwards it to the GFS. If the caller has selected an APOC, the GFS extends the call to a called terminal associated with the selected APOC. If the caller has indicated that no APOC is to be used, then the call receives appropriate call treatment selected depending on the condition of the called line and/or terminal and the features to which the called party subscribes.

### Brief Description Of The Drawings

These and other features of the invention will be best understood by reference to the following detailed description of a preferred embodiment of the invention, taken in conjunction with the accompanying drawings, in which:
Fig. 1 is a block diagram showing a first exemplary embodiment of a telecommunications system 100 constructed according to the present invention and adapted for use in the environment of primarily circuit-based telecommunications networks, in which a switching system or its equivalent that serves a calling station is primarily responsible for controlling an alternate point-of-contact service;
Fig. 2 is a block diagram showing a second exemplary embodiment of a telecommunications system 200 constructed according to the present invention and adapted for use in the environment of primarily circuit-based telecommunications networks, in which a switching system or its equivalent that serves a calling station is primarily responsible for controlling an alternate point of contact service;
Fig. 3 is a block diagram showing a third exemplary embodiment of a telecommunications system 300 constructed according to the present invention and adapted for use in the environment of a primarily packet-based telecommunications network;
Fig. 4 is a flow diagram showing a method 400 for use in conjunction with the telecommunications system 100 of Fig. 1 for processing a call to an unavailable station or terminal, including providing to a caller a choice of alternate points of contact; and
Fig. 5 is a flow diagram showing a method 500 for use in conjunction with the telecommunications system 200 of Fig. 2 for processing a call to an unavailable station or terminal, including providing to a caller a choice of alternate points of contact.

### Detailed Description Of The Exemplary Embodiments

In accord with aspects of the present invention, exemplary embodiments of telecommunications systems 100, 200 and 300 are described which include elements operative when a call is placed by an appropriate subscriber to an unavailable called party or station to provide to a caller a list of alternate points of contact (APOC). The alternate points of contact are preferably selected to be useful based on the context of the call, which may include, for example, the caller's identity and role, the called party's identity and role, and the called party's company or organization. For example, the alternate points of contact for a called party within a corporation, government agency, or other large organization, might include other members of the called party's department. The alternate points of contact could also include other persons the caller has called recently at that corporation, agency, or organization. These and any other sources of alternate points of contact could be used in any suitable combination useful to the caller. For other called parties, such as retail businesses, the alternate points of contact may include, for example, other retail businesses of the same type or category. The caller may select a member of the list and the telecommunications system will attempt to extend or transfer the call to the selected contact.

The present application relates to telecommunications systems, including multimedia telecommunications systems, which may be implemented using a variety of electronic and optical technologies, including but not limited to: analog electronic systems; digital electronic systems; microprocessors and other processing elements; and software and other embodied collections of steps, instructions, and the like, for implementing methods, processes, or policies in conjunction with such systems and processing elements. The embodiments described herein are exemplary. Thus it will be appreciated that although the embodiments are described in terms of specific technologies, other equivalent technologies could be used to implement systems in keeping with the spirit of the present invention. Moreover, it will be appreciated that in the telecommunications arts, various signal leads, busses, data paths, data structures, channels, buffers, and other communications paths may be used to implement a facility, structure, or method for conveying information or signals, and are often functionally equivalent. Accordingly, unless otherwise noted, references to apparatus or data structures for conveying a signal or information are intended to refer generally to all functionally equivalent apparatus and data structures.

A telecommunications system constructed according to an aspect of the present invention may, in various embodiments, provide communications bearing voice signals, data, video, and any other content. Hereinafter, the term "call" is used herein to refer a session of information transfer between a set of subscriber terminals (or other endpoints) via a telecommunications system or network. Unless otherwise specified, the term "call" is intended to refer broadly to any type of call, service, connection, session, packet, or datagram, or any related group or stream thereof, regardless of media or content, and regardless of whether or not the communication is circuit, connection, or session oriented. Thus, the term "call" is intended to include, but not be limited to traditional circuit voice calls, packet voice calls, circuit data calls, connectionless calls, or packet data calls, and multimedia variants thereof. The term "call processing" is intended to refer to the functions needed to initiate, maintain, and conclude such calls, including any related features or services.

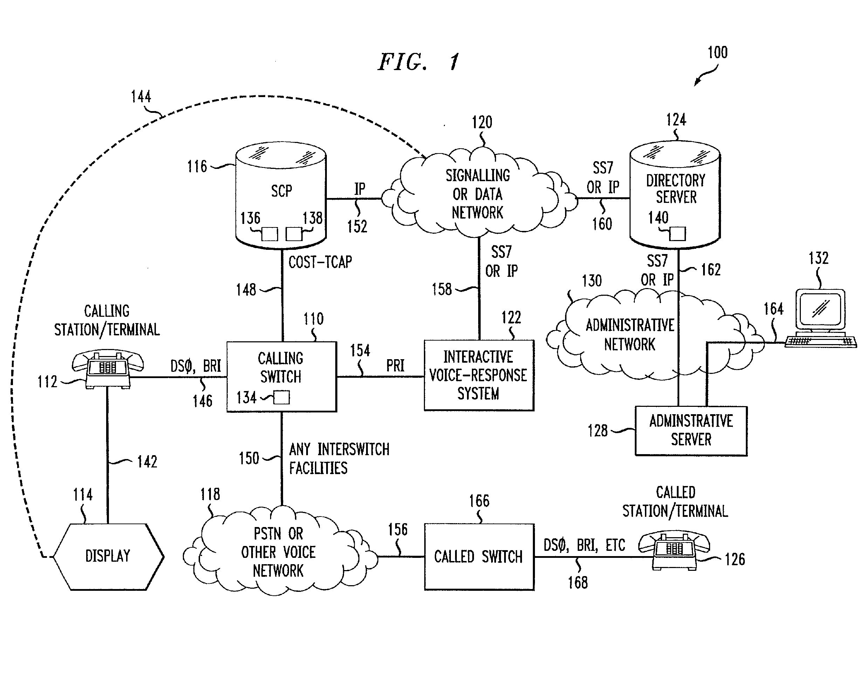

Fig. 1 is a block diagram showing a first exemplary embodiment of a telecommunications system 100 constructed according to the present invention and adapted for use in the environment of primarily circuit-based telecommunications networks. Like elements shown in the Figures bear the same reference numbers. The telecommunications system 100 may be constructed in a manner generally similar to known telecommunications systems, but with certain components added, and other components modified, to provide certain call handling and subscriber information handling functions according to an aspect of the present invention.

Telecommunications system 100 is adapted for use in the environment of a primarily circuit-based telecommunications network. A calling station/terminal 112 is operatively connected via a link 146 to a serving telecommunications switching system, exchange, or equivalent means, generally denoted by reference number 110, for processing and switching calls and providing call features to the calling station/terminal 112. The calling station/terminal 112 may be a wired telephone, a wireless telephone, a data terminal, or any other device for providing an interface enabling a user to access the telecommunications system 100. The link 146 may be any suitable connection to calling switch 110, including without limitation a conventional subscriber line, an ISDN line, a wireless link, or the like.

An optional calling station display 114 may be provided for use in conjunction with calling station/terminal 112. The display may be used to present APOC information to the caller. The calling station display 114 may be connected to the calling station/terminal 112 via any suitable terminal-to-display link 142. Alternatively, the calling station display 114 may be in proximity to the calling station/terminal, but operatively connected to calling switch 110, SCP 116, and/or DS 124, via a network-to-display link 144 interconnection to a signaling or data network 120 (described in further detail later).

The serving telecommunications switching system/exchange 110 may be any device or system which provides network access and call, session, connection, packet, or datagram processing functions to a calling station/terminal such as 112. Hereinafter, the serving telecommunications switch or exchange will be referred to as the calling switch. The calling switch 110 preferably includes storage means 134 for containing subscriber feature records and various other information relating to each station/terminal/subscriber directly served by the switch. Any suitable electronic, magnetic, or optical storage facilities could be used, including but not limited to memory in a control processor, disk file, or database facility of the calling switch 110. The terms "switch" and "exchange" as used herein are not intended to refer to a specific architecture. Although telecommunications system 100 is discussed in the context of a primarily circuit-based network, this does not imply the presence of a conventional fabric for switching time-multiplexed PCM voice channels arranged in time slots. it will be appreciated that the switching/exchange, call processing, and other related functions of such networks may be provided by any suitable circuit, cell, or packet switching and routing technology.

For example, calling switch 110 may be a distributed stored-program-controlled digital switch, such as the 5ESS® switching system, a product of Lucent Technologies Inc., 600 Mountain Avenue, Murray Hill, New Jersey, 07974-0636, and described in the AT&T Technical Journal, vol. 64, number 6, July/Aug. 1985, pages 1303-1564. Calling switch 110 may also be a distributed, stored-program-controlled, integrated services digital network (ISDN) electronic switching system such as the system disclosed in U. S. patent number 4,592,048, issued to M. W. Beckner, et al., on May 27, 1986. Calling switch 110 may also be a switching system incorporating packet-based core elements, such as the 7R/E switching system, also a product of the aforementioned Lucent Technologies, Inc. Other switching system implementations could also be used.

The telecommunications system 100 preferably comprises first and second networks 118 and 120. The first network 118 may be a public or private network, or a combination thereof, and preferably includes at least facilities capable of carrying voice calls and concomitant signaling traffic. The second network 120 may be a public or private network, or a combination thereof, and preferably includes at least facilities capable of data and/or signaling traffic, including directory and/or APOC information between elements of the telecommunications system 100.

Networks 118 and 120 may be constructed using any appropriate network transmission, switching, and routing technologies, as are known in the art, including but not limited to T-carrier, Optical Carrier (OC), Synchronous Optical Network (SONet), Synchronous Digital Hierarchy (SDH), Internet Protocol (IP), Asynchronous Transfer Mode (ATM) technologies. Although voice-capable network 118 and signaling/data network 120 are shown as separate networks to clarify that the bearer traffic and the control/signaling traffic may take separate paths, these networks may, in fact, be integrated, and bearer and control/signaling traffic may traverse the same network elements. Unless otherwise specified, links between elements of telecommunications system 100 may employ any of the aforementioned technologies.

The calling switch 110 is preferably connected to voice-capable network 118 via facilities 150, which may, for example, be conventional trunks, or any suitable interoffice facilities, including but not limited to the technologies described above as suitable for use in implementing networks 118 and 120.

A called station/terminal 126 is served by a called switch 166 via a link 168. The called switch 166 may be implemented using any of the technologies described above as implementation candidates for calling switch 110. Although calling switch 110 and called switch 166 are described and shown herein as separate elements, it will be appreciated that both the calling station/terminal 112 and the called station/terminal 126 may be served by a single switching system. The called switch 166 is also connected to the voice-capable network 118 via a link 156. The called station/terminal 126 may be a wired telephone, a wireless telephone, a data terminal, or any other device for providing an interface enabling a user to access the telecommunications system 100 via network voice-capable network 118. The link 168 may be any suitable connection to the called switch 166, including without limitation a conventional subscriber line, an ISDN line, a wireless link, or the like. The called switch 166 may be implemented using any of the types of switching systems or equivalents discussed above in connection with calling switch 110. Link 156 may be implemented using any suitable facilities, as described above in connection with link 150.

The calling switch 110 is also connected to a suitable database and service logic element 116. In networks conforming to the standards of the North American public switched telephone network, the database and service logic element 116 is preferably an "intelligent network" element such as a Services Control Point (SCP). For example, element 116 could be implemented using the Lucent Technologies Services Control Point, available from Lucent Technologies Inc., 600 Mountain Avenue, Murray Hill, New Jersey, 07974-0636. However, element 116 could also be implemented using another type of intelligent network element, or, in some networks, a general purpose database and applications processing server. Element 116 preferably includes storage means 136 containing locally-stored directory information and storage means 138 containing subscriber recent call records. These storage means may be implemented using any suitable electronic, magnetic, or optical storage facility, including but not limited to memory of a control processor, a disk file, or a database system.

The calling switch 110 may also be connected to an optional interactive voice response (IVR) system 122 via a link 154. The IVR system 122 may be used to present APOC information to the caller, and receive instructions or selections from the caller. The IVR system 122 may be used in lieu of, or in addition to, the calling station display 114. For example, the IVR system may play recorded or synthesized message describing the APOC options available to the caller. The IVR system 122 may receive instructions, selections, or other input from the caller in the form of spoken words or numbers or as tones representing the operation of keys at the calling station/terminal 112. In order to provide these services, the IVR system 122 may incorporate appropriate speech and digit reception hardware and software, as is known in the art. IVR system 122 may be implemented, for example, using an interactive voice response and applications delivery platform commercially available from Lucent Technologies Inc., 600 Mountain Avenue, Murray Hill, New Jersey, 07974-0636, under the designation Conversant Interactive Voice Response System. IVR server 122 could also be implemented using an intelligent network service node element, such as that available from Lucent Technologies Inc., 600 Mountain Avenue, Murray Hill, New Jersey, 07974-0636 under the designation Lucent Technologies Compact Service Node. However, other speech-processing, voice-processing, signal-processing and/or digit reception systems could also be used. Link 154 may be implemented using any suitable path capable of carrying voice traffic, including by way of example by not limitation, one or more lines or trunks, an ISDN primary rate interface, or any of the facilities described above for use in implementing networks 118 and 120.

The SCP 116 and the IVR system 122 are preferably also connected to a suitable directory server (DS) 124 where directory information 140 used to produce a list of appropriate alternate points of contact is stored. The directory server may be an intelligent network database element, such as an SCP, or may be a general purpose database system of known design. Although SCP 116 and directory server 124 are shown as separate elements, their functions could be combined in a single element. Even if separate, relevant directory information used to derive APOC information to be provided to a caller may be distributed among directory information storage means 140 of directory server 124 and directory information storage means 136 of SCP 116. By way of example, but not limitation, the directory information stored in means 138 may be a cache of information recently obtained from directory server 124, or may be a subset of information stored in directory server 124 which has been selected for geographical or other significance to calling switch 110 (and any other switches served by SCP 116). The information in storage means 140 and 136 could also be unrelated or disjoint. SCP 116, IVR system 122, and directory server 124 may be interconnected via links 152, 158, and 160 and signaling or data network 120. However, links 152, 158, and 160 could also be point-to-point links.

An administrative server 128 and an administrative terminal 132 may be provided to manage the contents and operation of the database server 124. The administrative server 128 may be part of an Operations Support System, order entry system, or other administrative system of a network operator. The administrative server 128 may also be a standalone administrative system or a database system. The administrative server may be interconnected with the directory server and administrative terminal via links 162 and 164 respectively, and may be intermediately connected via a suitable administrative network 130 capable of carrying data or signaling traffic between the elements. Administrative network 130 may be implemented in a manner similar to that described for signaling or data network 120. Although administrative server 130 is shown and described herein as a separate element, its functions could be integrated with signaling or data network 120.

In this first exemplary embodiment constructed according to an aspect of the present invention, the APOC services are preferably provided by, and controlled by or through, the calling switch, in cooperation with intelligent network elements or their equivalents, and any APOC services provided depend on features to which the caller has subscribed.

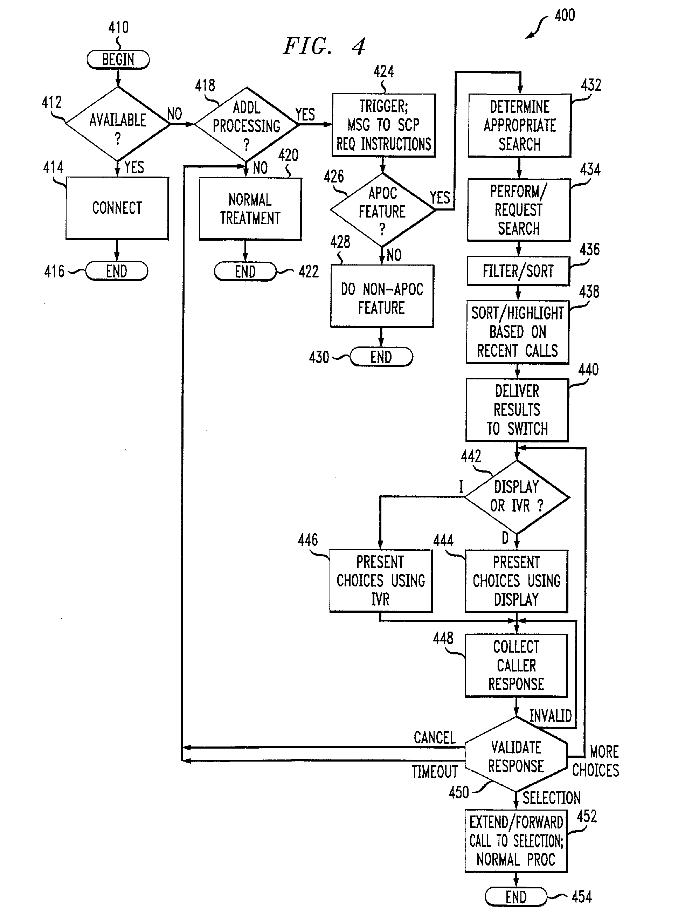

Fig. 4 is a flow diagram showing an exemplary method 400 for use in conjunction with the telecommunications system 100 of Fig. 1, in order to complete processing of a call to an unavailable station or terminal, including providing to a caller a choice of alternate points of contact. The method 400 is provided as an example of the way elements of telecommunications system 100 may be controlled in cooperation to provide an APOC service to a caller. Call processing steps which are not directly related to providing an APOC service are not shown. However, one of skill in the art will understand how to perform those aspects of call processing which are conventional.

In step 410, a call destined for the called station/terminal 126 arrives at calling switch 110. In step 412, calling switch 110 determines whether called station/terminal 126 is available--that is, whether the call can be delivered to the called station/terminal 126. If called station/terminal 126 is available, the method continues in step 414. In step 414, the calling switch 110 connects the call to the called station/terminal 126, and the method ends in step 416.

However, if in step 412, the called station/terminal 126 was not available, then the method continues in step 418. In step 418, the calling switch 110 examines its subscriber feature records 134 to determine whether the subscription associated with calling station/terminal 112 includes any features that require additional processing of the call. If no additional processing is required, the method continues in step 420, in which the call receives normal "busy" or "no-answer" treatment. Such treatment may include forwarding to an attendant or voice mail system. Thereafter, the method ends in step 422.

If in step 418, calling switch 110 determined that further processing was required, the method continues in step 424. An appropriate intelligent network "busy" or "no-answer" trigger is activated, and a message is transmitted to the SCP 116 providing the particulars of the call and requesting additional instructions for processing the call. In step 426, SCP 116 consults its call feature records associated with the subscription for calling station/terminal 112 to determine what service to provide. Step 426 is shown for clarity as a binary determination of whether to provide an APOC service or some other service, but in practice, this determination may be implemented as a selection of one of many available services. If a service other than an APOC service is to be provided, then the method continues in step 428. The SCP transmits a message to calling switch 110 providing further call processing instructions, and the calling switch 110 executes them. Then the method ends in step 430.

If, in step 426, it was determined an APOC service should be provided, the method continues in step 432. In step 432, the SCP 116 uses its service logic to determine what alternate point of contact information may be appropriate. In step 434, conducts a search of its locally-stored directory information 136, or conducts a query of directory information 140 from the directory server 124, or both.

The criteria used in step 434 to select candidate APOC information to be presented to the caller may vary with the particular service implemented by a network operator, and with the roles of the calling and called subscribers. By way of example and not limitation, if the calling and called subscribers are both public network subscribers and are not otherwise associated with one another, and the called subscriber is a business, SCP 116 may search for other similar businesses. SCP 116 could perform such a search, for example, by extracting from directory information storage means 136 or 140 a Standard Industry Classification (SIC) code corresponding to the called subscriber, and then searching the directory information storage means 136 or 140 for other subscribers having a similar SIC code. For another example, if called station/terminal 126 is associated with a large business, agency, or organization, and if the organization's directory information is available, e.g., from directory server 124, then SCP 116 may perform a search for other members of the workgroup or department of which the called party is a member. The caller may be permitted to select one or more criteria for search.

In step 436, which is optional, individual elements of the search results may be filtered and/or sorted based on appropriate criteria. For example, the results may be sorted in order of ascending distance from the caller's location, and all results further than some threshold distance may be cast off. The caller may be permitted to select one or more criteria for filtering or sorting.

In step 438, which is also optional, individual elements of the search results may be compared with a list of recent calls by the caller, in order to mark corresponding directory items for special treatment. For example, directory items discovered in the search and corresponding to earlier calls by the caller may be prioritized ahead of other candidate APOC results, as the caller, having called those subscribers at least once before, is more likely to wish to call one of them again. If the list is presented in a visual display, corresponding directory items may be highlighted. The caller may be permitted to select whether special treatment is to be applied to directory items corresponding to recent calls.

In steps 440-450, the search results, consisting of candidate APOC directory items, are delivered to the calling switch 110 and presented to the caller; the caller is prompted for a selection; and the selection is detected by or reported to the calling switch 110.

In step 440, the SCP 116 delivers the search results to calling switch 110. In step 442, the calling switch 110 consults its subscriber feature records 134 to determine whether the candidate APOC directory items shall be presented via the calling station display 114 (if present), or via the IVR system 122. Although step 442 is shown and discussed herein as a binary selection, other means could also be used for presenting candidate APOC directory items to the caller. If in step 442 it was determined that the candidate APOC directory items should be presented using the calling station display 114, then the method continues in step 444. In step 444, the calling switch 110 transmits the information to the display. The method then continues in step 448.

If in step 442, the calling switch 110 determined that no display is available, the method continues in step 446. The calling switch 110 transmits the candidate APOC directory items to IVR system 122 and requests that they be announced to the user. The method then continues in step 448.

In step 448, the switch arranges to receive a selection from the caller using an available means for receiving input from the caller. For example, the calling station display 114 or the calling station/terminal 112 may have a keypad which can cause transmission of a message to the calling switch 110 identifying keys activated by the caller. In that case, the calling switch 110 may allocate a register or buffer for receiving such messages. Alternatively, the display 114 or terminal 112 may have a keypad which causes DTMF or other voice-band signaling to be generated. In that case, calling switch 110 may allocate a digit receiver under its control to receive any such signaling, or may request digit receiving services from an intelligent network element, such as IVR system 122 or an available service node (not depicted in Fig. 1, but may take the place of IVR system 122 in that Figure). As another alternative, the calling switch 110 may request voice recognition services from IVR system 122 or another intelligent network element.

However, in some embodiments, it may not be desirable to allow the caller to select whether to use an APOC, and if so, which APOC is used. instead, it may be preferable that the network equipment, rather than the caller, make those determinations, and that the caller simply be informed that the call is being redirected to an alternate point of contact, by displaying a message or playing an announcement. Optionally, the message or announcement may identify the alternate point of contact to be used. In those instances, selection of the particular APOC used among the earlier-identified candidates could be performed, e.g., as a part of step 442, by the calling switch, the directory server, or some other element. Steps 444 and/or 446 may be modified to present the message or play the announcement, and steps 448 and 450 may be omitted.

In step 450, the calling switch 110 analyzes the caller's response to determine if it is valid. The particular responses considered valid will depend on the type of candidate APOC directory information provided and the service provided by the network operator. By way of example, but not limitation, possible valid responses could include a request to cancel the current instance of the APOC service, a request for additional choices, or a numeral corresponding to one of the candidate APOC directory items offered. Calling switch 110 may repeat steps 442-450 until a valid response is received, or until a timer has elapsed indicating that no valid response occurred within a specified time.

If the caller has requested additional choices, the method returns to step 442, and additional choices, if any are available, are presented to the caller. Then the method continues sequentially as described above. If in step 450, the calling switch 110 determines that the caller has requested that the current instance of the APOC service be cancelled, or if the predetermined time for response has elapsed, the method jumps to step 420, in which the call receives normal "busy" or "no-answer" treatment. Thereafter, the method ends in step 422. If in step 450, the calling switch 110 determines that the caller has selected one of the candidate APOC directory items, then the method continues in step 452.

In step 452, calling switch 110 extends or forwards the call to the subscriber associated with the directory item selected by the user. The call is then further processed in accord with normal call processing methods. The method ends in step 454.

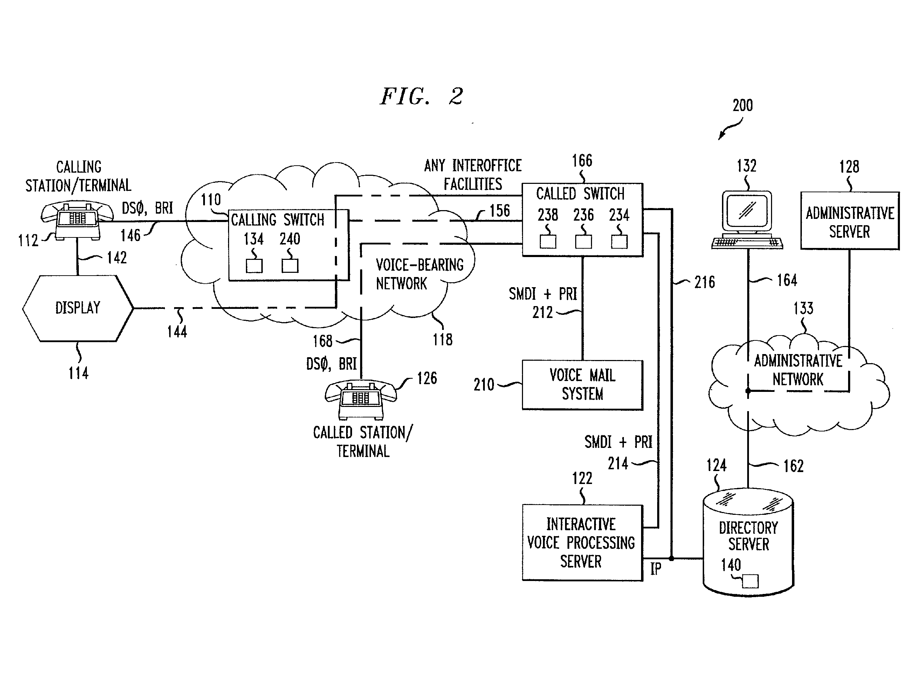

According to an aspect of the present invention, a second exemplary embodiment 200, as best seen in Fig. 2, is adapted for use in the environment of a primarily circuit-based telecommunications network, in which a switching system serving a called station/terminal is primarily responsible for controlling an alternate point-of-contact service. The second embodiment may be particularly useful in non-public networks, as might be found in a corporation, government agency, or other organization; but could still be useful in public networks as well. The second exemplary embodiment 200 is similar in many respects to the first exemplary embodiment 100. Where portions of the second exemplary embodiment are the same as equivalent portions of the first embodiment, those portions will not be described again in detail.

A calling station/terminal 112 is connected to and served by a first switching system (or equivalent means for processing and switching calls) 110 via a voice-bearing network 118. The switching system 110 serving the calling station 112 is referred to as the "calling switch." The calling station 112 may have an associated display 114, which may be connected to the calling station 112 via a link 142, or may be connected to the called switch 166 via a link 144 through the voice-bearing network 118 and calling switch 110 . Although link 144 is shown as a distinct path, it will be appreciated that such link may simply be a transient, nondedicated route through the voice-bearing network 118. Depending on the capabilities of the calling terminal 112, display 114, and network 118, called switch 166 may transmit information to be presented via display 114 directly via link 144 or indirectly through calling station 112 and links 146 and 142.

As best seen in Fig. 2, calling switch 110 preferably includes storage means 134 for containing subscriber feature records and various other information relating to each station/terminal/subscriber directly served by the switch. Calling switch 110 also preferably includes storage means 240 containing subscriber recent call records, including those for calling station/terminal 112. Any suitable electronic, magnetic, or optical storage facilities could be used to implement storage means 134 and 240, including but not limited to memory in a control processor, disk file, or database facility of the calling switch 110.

A called station/terminal 126 is connected to and served by a second switch 166 via the voice-bearing network 118. The switching system 166 serving the called station 126 is referred to as the "called switch." As best seen in Fig. 2, called switch 166 preferably includes storage means 234 for containing subscriber feature records and various other information relating to each station/terminal/subscriber directly served by the switch. Called switch 166 preferably also includes storage means 236 for containing a local version of certain directory information, and storage means 238 for containing a temporary copy of records identifying telephone numbers recently called by users of the APOC service. Any suitable electronic, magnetic, or optical storage facilities could be used to implement storage means 234, 236, and 238, including but not limited to memory in a control processor, disk file, or database facility of the called switch 166. The directory server 124 also preferably contains storage means 140 for storing directory records.

The voice-bearing network 118, a voice mail system 210, and an interactive voice response (IVR) system 122 are also connected to the called switch 166 via links 156, 212, and 214, respectively. A directory server 124 is connected to the IVR system 122 and the called switch 166 via a link 216. Although the voice mail system 210 and the IVR system 122 are shown as separate components, their functionality may be combined in a single unit.

Although shown in the drawings herein as a single network, the voice-bearing network 118 may incorporate elements of the public switched telephone network and one or more private networks. In the second exemplary embodiment, the APOC services are controlled by a switching system 166 associated with the called terminal (or other elements of the terminating network) 126, and the particular services available can vary according to features to which the calling party and the called party may independently subscribe. Accordingly, any caller to the called station/terminal 126 may receive APOC services even though the calling party fray not subscribe to APOC services.

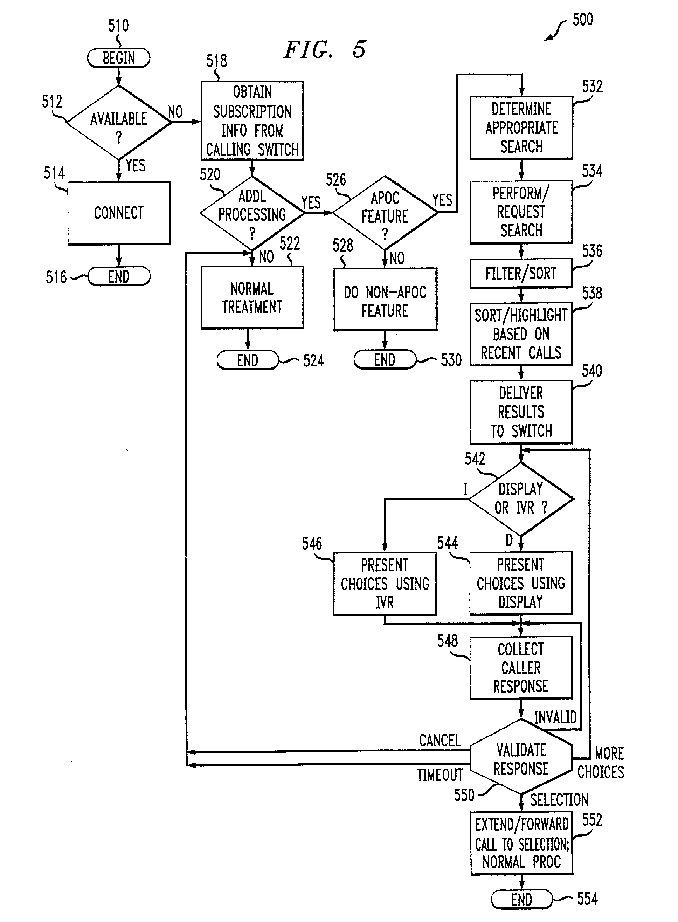

Fig. 5 is a flow diagram showing an exemplary method 500 for use in conjunction with the telecommunications system 200 of Fig. 2, in order to complete processing of a call to an unavailable station or terminal, including providing to a caller a choice of alternate points of contact. The method 500 is provided as an example of the way elements of telecommunications system 200 may be controlled in cooperation to provide an APOC service to a caller. Call processing steps which are not directly related to providing an APOC service are not shown. However, one of skill in the art will understand how to perform those aspects of call processing which are conventional.

In step 510, a call destined for the called station/terminal 126 arrives at called switch 166. In step 512, called switch 166 determines whether the called station/terminal 126 is available--that is, whether the call can be delivered to the called station/terminal 126. If called station/terminal 126 is available, the method continues in step 514. In step 514, the called switch 166 connects the call to the called station/terminal 126, and the method ends in step 516.

However, if in step 512, the called station/terminal 126 was not available, then the method continues in step 518. Either the calling party or the called party could subscribe to services or features which may entitle a caller to receive APOC service when the called station/terminal is unavailable. APOC service furnished according the calling party's subscription could be provided by the calling switch as described earlier in connection with the first exemplary embodiment 100 and method 400. Alternatively, APOC service furnished according to the calling party's subscription could be provided by the called switch. This may provide an advantage by harmonizing the APOC services furnished under both the calling and called parties' subscriptions, at the expense of requiring the called switch to obtain information about the calling party's subscription.

Accordingly, in step 518, which is optional depending on whether the called switch is to provide such services, the called switch 166 launches an inquiry to the calling switch 110 for information 134 about APOC services to which the calling party is entitled under the calling party's subscription. Alternatively, the calling switch could automatically supply such subscription information with (or shortly following) all calls delivered on behalf of APOC service subscribers. Also as a part of step 518 (or the initial delivery of a call), the calling switch 110 may also supply to called switch 166 for later use information from storage means 240 regarding recent calls made or received by the calling party; such information may be stored temporarily in storage means 238, along with similar information for other users of called switch 166.

In step 520, the called switch 166 examines its subscriber feature records 234 for the called party, and any records received regarding the calling party's subscription, to determine whether the subscription associated with calling station/terminal 112 includes any features that require additional processing of the call. If no additional processing is required, the method continues in step 522, in which the call receives normal "busy" or "no-answer" treatment. Such treatment may include forwarding to an attendant or voice mail system. Thereafter, the method ends in step 524.

If in step 520, the called switch 166 determined that further processing was required, the method continues in step 526. In step 526, the called switch 166 determine what service to provide. Step 526 is shown for clarity as a binary determination of whether to provide an APOC service or some other service, but in practice, this determination may be implemented as a selection of one of many available services. If a service other than an APOC service is to be provided, then the method continues in step 528. The called switch 166 executes the appropriate processing to terminate the call, Then the method ends in step 530.

If, in step 526, it was determined an APOC service should be provided, the method continues in step 532. In step 532, the called switch 166 uses its service logic to determine what alternate point of contact information may be appropriate. If both the calling and called parties' subscriptions call for APOC service to be provided, this step may include a selection or harmonization among those services to determine which particular APOC services will be provided. In step 534, the called switch conducts a search of its locally-stored directory information 236, or conducts a query of directory information 140 from the directory server 124, or both. In some embodiments, it may be desirable to offload the processing required to search for and filter records to another device, such as the directory server 124.

The criteria used in step 534 to select candidate APOC information to be presented to the caller may vary with the particular service implemented by a network operator, and with the roles of the calling and called subscribers. By way of example and not limitation, if the calling and called subscribers are both public network subscribers and are not otherwise associated with one another, and the called subscriber is a business, called switch 166 (or the directory server 124) may search for other similar businesses. Called switch 166 (or the directory server 124) could perform such a search, for example, by extracting from directory information storage means 236 or 140 a Standard Industry Classification (SIC) code corresponding to the called subscriber, and then searching the directory information storage means 236 or 140 for other subscribers having a similar SIC code. For another example, if called station/terminal 126 is associated with a large business, agency, or organization, and if the organization's directory information is available, then called switch 166 (or the directory server 124) may perform a search for other members of the workgroup or department of which the called party is a member. The caller may be permitted to select one or more criteria for search.

In step 536, which is optional, individual elements of the search results may be filtered and/or sorted based on appropriate criteria. For example, the results may be sorted in order of ascending distance from the caller's location, and all results further than some threshold distance may be cast off. The caller may be permitted to select one or more criteria for filtering or sorting.

In step 538, which is also optional, individual elements of the search results may be compared with a list of recent calls placed by or to the caller, in order to mark corresponding directory items for special treatment. For example, directory items discovered in the search and corresponding to earlier calls by the caller (as recorded in storage means 240, 238) may be prioritized ahead of other candidate APOC results, as the caller, having called those subscribers at least once before, is more likely to wish to call one of them again. If the list is presented in a visual display, corresponding directory items may be highlighted. The caller may be permitted to select whether special treatment is to be applied to directory items corresponding to recent calls.

In steps 540- 550, the search results, consisting of candidate APOC directory items, are delivered to the called switch 166 and presented to the caller; the caller is prompted for a selection; and the selection is detected by or reported to the called 166.

In step 540, which is an optional step required only if search processing was offloaded to another device, such as directory server 124, the search results are delivered to the called switch 166. In step 542, the called switch 166 consults its subscriber feature records 134 to determine whether the candidate APOC directory items shall be presented via the calling station display 114 (if present), or via the IVR system 122. Although step 542 is shown and discussed herein as a binary selection, other means could also be used for presenting candidate APOC directory items to the caller. If in step 542 it was determined that the candidate APOC directory items should be presented using the calling station display 114, then the method continues in step 544. In step 544, the called switch 166 transmits the information to the display. Depending on how the display 114 is operatively connected to the called switch 166 (i.e., messages may be directly routable to the display from called switch 166, or message may need to be routed through calling switch 110, or through both calling switch 110 and calling station/terminal 112), the calling switch 110 may participate in relaying or forwarding the information. The method then continues in step 548.

If in step 542, the called switch 166 determined that no display is available, the method continues in step 546. The called switch 166 transmits the candidate APOC directory items to IVR system 122 and requests that they be announced to the user. The method then continues in step 548.

In step 548, the switch may arrange to receive a selection from the caller using an available means for receiving input from the caller. For example, the calling station display 114 or the calling station/terminal 112 may have a keypad which can cause transmission of a message to the called switch 166 identifying keys activated by the caller. In that case, the called switch 166 may allocate a register or buffer for receiving such messages. Alternatively, the display 114 or terminal 112 may have a keypad which causes DTMF or other voice-band signaling to be generated. In that case, called switch 166 may allocate a digit receiver under its control to receive any such signaling, or may request digit receiving services from an intelligent network element, such as IVR system 122 or an available service node (not depicted in Fig. 2, but may take the place of IVR system 122 in that Figure). As another alternative, the called switch 166 may request voice recognition services from IVR system 122 or another intelligent network element.

However, in some embodiments, it may not be desirable to allow the caller to select whether to use an APOC, and if so, which APOC is used. Instead, it may be preferable that the network equipment, rather than the caller, make those determinations, and that the caller simply be informed that the call is being redirected to an alternate point of contact, by displaying a message or playing an announcement. Optionally, the message or announcement may identify the alternate point of contact to be used. In those instances, selection of the particular APOC used among the earlier-identified candidates could be performed, e.g., as a part of step 542, by the called switch, the directory server, or some other element. Steps 544 and/or 546 may be modified to present the message or play the announcement, and steps 548 and 550 may be omitted.

In step 550, the called switch 166 analyzes the caller's response to determine if it is valid. The particular responses considered valid will depend on the type of candidate APOC directory information provided and the service provided by the network operator. By way of example, but not limitation, possible valid responses could include a request to cancel the current instance of the APOC service, a request for additional choices, or a numeral corresponding to one of the candidate APOC directory items offered. Called switch 166 may repeat steps 542-550 until a valid response is received, or until a timer has elapsed indicating that no valid response occurred within a specified time.

If the caller has requested additional choices, the method returns to step 542, and additional choices, if any are available, are presented to the caller. Then the method continues sequentially as described above. If in step 550, the called switch 166 determines that the caller has requested that the current instance of the APOC service be cancelled, or if the predetermined time for response has elapsed, the method jumps to step 520, in which the call receives normal "busy" or "no-answer" treatment. Thereafter, the method ends in step 522. If in step 550, the called switch 166 determines that the caller has selected one of the candidate APOC directory items, then the method continues in step 552.

In step 552, called switch extends or forwards the call to the subscriber associated with the directory item selected by the user. The call is then further processed in accord with normal call processing methods. The method ends in step 554.

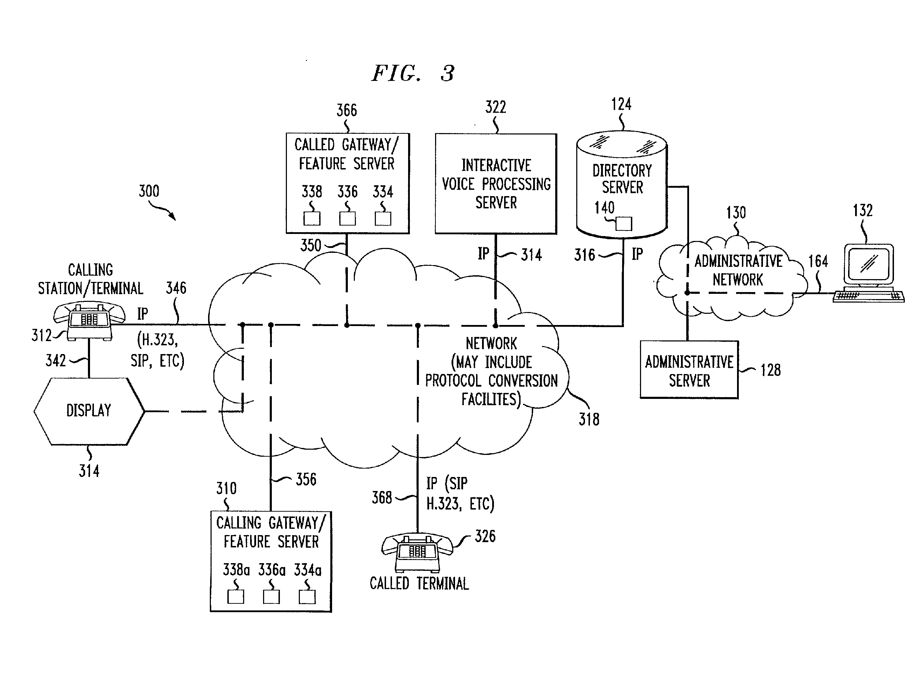

According to an aspect of the present invention, a third exemplary embodiment 300, as best seen in Fig. 3, is adapted for use in the environment of a primarily packet-based telecommunications network. The third exemplary embodiment 300 is similar in many respects to the first and second exemplary embodiments 100 and 200. Where portions of the third exemplary embodiment similar to or equivalent to portions of the first and second embodiments, those portions will not be described again in detail.

A calling station/terminal 312 is operatively connected to a calling gateway/feature server (GFS) 310. A called station/terminal 326 is operatively connected to a called gateway/feature server (GFS) 366. As best seen in Fig. 3, the components may be generally interconnected using a multi-purpose network 318, which may be implemented using any suitable physical media and any suitable digital information transport technologies, or any combination thereof, including but not limited to T-carrier, Optical Carrier (OC), Synchronous Optical Network (SONet), Synchronous Digital Hierarchy (SDH), Internet Protocol (IP), Asynchronous Transfer Mode (ATM), Ethernet, and/or various wireless technologies.

The multi-purpose network 318 may employ distributed control, routing, and switching technologies as is known in the art, to provide communications among multiple devices. Because the design of networks is well known, the internal components and structure of the multi-purpose network 318 is not discussed. It will be appreciated by one of skill in the art that commercial embodiments of networks may have access, service, and transport restrictions that permits certain types or grades of services only between predefined node devices. However, for simplicity of explanation, multi-purpose network 318 is treated herein as permitting any network-connected to communicate with any other network-connected device using any desired service supported by the network, and accordingly, devices connected to multi-purpose network 318 are considered to be operatively connected.

Accordingly, calling station/terminal 312 is connected to multi-purpose network 318 via a link 346. Called Station/Terminal 326 is connected to multi-purpose network 318 via a link 368. Calling GFS 310 is connected to multi-purpose network 318 via a link 356. Called GFS 366 is connected to multi-purpose network 318 via a link 350. Thus, it will be appreciated that calling GFS 310 and called GFS 366 are operatively connected through the multi-purpose network 318. Links may use any suitable technology (consistent with bandwidth demands between the device and the network) including, but not limited to, those mentioned above for use in implementing multi-purpose network 318. In addition, an interactive voice processing (IVP) server 322 is preferably connected to the network 318 via a link 314, and a directory server 124 may be connected to the network 318 via a link 316. The IVP server 322 may be similar to the interactive voice response system 122 of Figs. 1-2, but in some embodiments could also provide general-purpose voice- speech-and/or signal-processing services to the network. IVP server 322 may be implemented using any suitable speech processing, signal processing, and/or digit reception hardware and software. For example, IVP server 322 may be implemented using an interactive voice response and applications delivery platform commercially available from Lucent Technologies Inc., 600 Mountain Avenue, Murray Hill, New Jersey, 07974-0636, under the designation Conversant Interactive Voice Response System. IVP server 322 could also be implemented using an intelligent network service node, such as that commercially available from Lucent Technologies Inc. under the designation Lucent Technologies Compact Service Node. Other processing equipment could also be used to implement the IVP server 322.

Calling GFS 310 and called GFS 366 provide control and applications processing functions similar to the control and applications processing functions of switching systems in circuit-based networks. Calling GFS 310 and called GFS 366 may also provide some functions of intelligent network nodes, such as an SCP, found in traditional circuit-based networks. Although networks based on packet and/or cell technologies may not incorporate the traditional fabric of circuit-switched networks, such networks do incorporate routers and switches, and to the extent such elements require control at a per-call level, GFS 310 and GFS 366 may participate in that control. Calling GFS 310 and called GFS 366 may be implemented using any suitable gateway or call feature server. For example, GFSs 310 and 366 may be implemented using one of the telecommunications service delivery platforms which are commercially available from Lucent Technologies Inc., under the designations 5ESS® switching system or 7R/E Packet Solutions platform, in conjunction with an appropriate gateway element, such as one commercially available from AG Communication Systems, 2500 W. Utopia Road, Phoenix, AZ 85027-4129, under the designation AGCS iMerge Centrex Feature Gateway. Other products could also be used to implement GFSs 310 and 366.

APOC services in exemplary embodiment 300 may be provided and controlled by the called GFS 366 or the calling GFS 310. Accordingly, depending on which component is providing the APOC service, there is preferably provided appropriate storage means for subscriber feature records, locally stored directory information, and subscriber recent call information, as necessary to provide the desired APOC services. Calling GFS 310 may have subscriber feature record storage means 334a, locally-stored directory information storage means 336a, and recent call information storage means 338a. Called GFS 366 may have subscriber feature record storage means 334, locally-stored directory information storage means 336, and recent call information storage means 338. The directory server 124 contains means 140 for storing directory information, which may supplement, duplicate, or be a superset of that stored in the GFSs 310 and 366. The GFS providing a particular APOC service may have all necessary information local to it. Alternatively, such information may be requested from another GFS via multi-purpose network 318, from a directory server 124, or similar database service elements, and needed information may be distributed among plural devices.

Calling station/terminal 312 and called station/terminal 326 may be any suitable telecommunications terminals compatible with network 318 and GFSs 310 and 366. For example, stations 312 and 326 may be personal computers with commercially available IP-telephony software and suitable network interfaces. Alternatively, stations 312 and 326 may be standalone IP telephone devices, which are commercially available from several vendors. Such devices typically employ standard protocols for establishing calls, providing communications during a call, and tearing the calls down, which protocols may include H.323 and the Session Initiation Protocol. A calling station display 314 is preferably associated with calling station/terminal 312 to permit the caller to view APOC information, which may be presented as text or graphical images thereon. The display may be an integrated part of calling station/terminal 312, and may, for example, be connected to the calling station/terminal 312 via a link 342. Alternatively, calling station display 314 may be separate from calling station/terminal 312, and may be connected to multi-purpose network 318 via a link 344, and therefore operatively connected to the calling GFS 310 and called GFS 366. Only one of links 342 and 344 are necessary. Accordingly, depending on the relationship between the display 314 and the terminal 312, GFS 310 or GFS 366 may transmit information to be presented on the display 314 either through the terminal 312 and link 346, or directly to the display through link 344. If a display 314 is not available, or if the caller prefers, the APOC information may be presented using the IVP server 322. Information, such as the choice of an APOC candidate to be called, may be obtained from the user via input devices available on the terminal, and may be transmitted directly to the GFS controlling the APOC service or may be decoded or translated by the IVP server 322 or another similar facility. Voice responses by the user may be decoded and translated by the IVP Server 322.

A directory administrative server 128 and administrative terminal 132 may be provided to manage the contents and operation of the directory server 124. The directory administrative server 128, terminal 128, and directory server 124 may be directly connected to one another or via an administrative network 130, via links 162 and 164. The directory administrative server 128 may have additional network administrative functions, and may be a part of an operations support system or other network operator administrative system. Although network 130 is shown as a separate element, it may be integrated as a part of multi-purpose network 318.

In operation, a method similar to method 400 shown in Fig. 4 may be used if the APOC service is to be controlled by the calling GFS 310. A method similar to method 500 shown in Fig. 5 may be used if the APOC service is to be controlled by the called GFS 366. A call to an unavailable called station/terminal 326 is detected by the calling GFS 310 or called GFS 366. If a display 314 is available at the calling station/terminal 312, the GFS may search its local directory information or request APOC information directly from the directory server 124 and transmit it to the display 114 for presentation to the caller. If a display 114 is not available at the calling station/terminal, the GFS requests APOC information from the directory server (or local resources) and forwards it to the IVP server 322. The GFS attaches the IVP server 322 to the call, and the IVP server 322 presents the APOC information to the caller. The IVP server 322 receives the user's APOC selection and forwards it to the controlling GFS. If the caller has selected an APOC, the controlling GFS extends the call to a called terminal associated with the selected APOC. If the caller has indicated that no APOC is to be used, then the call receives appropriate call treatment selected depending on the condition of the called line and/or terminal and the features to which the called party subscribes.

The above-described embodiment of the invention is merely one example of a way in which the invention may be carried out. Other ways may also be possible and are within the scope of the following claims defining the invention.

## Claims

1. For use in conjunction with a telecommunications system having a calling subscriber terminal, a called subscriber terminal, a switching system servicing calls from the calling subscriber terminal, and a switching system servicing calls to said called subscriber terminal, said switching systems being interconnected by a network, a method of providing an alternate point of contact service for calls arriving while the called subscriber terminal is unavailable comprising the steps of:
a. receiving a call destined for said called subscriber terminal;
b. determining that said called subscriber terminal is unavailable;
c. obtaining information defining at least one alternate point of contact for a subscriber associated with said called subscriber terminal;
d. providing some of said information to said calling subscriber terminal; and
e. extending said call to at least one of said at least one alternate point of contact.

2. The method of claim 1 wherein step c. thereof includes obtaining information defining a plurality of alternate points of contact for a subscriber associated with said called subscriber terminal, and further comprising the step of:
dl. receiving from a user of said called subscriber terminal a selection of a particular alternate point of contact, from among said plurality of alternate points of contact, to which the call is to be extended.

3. The method of claim 1 wherein step d. thereof includes presenting some of said information on a display operatively connected to said telecommunications system.

4. The method of claim 1 wherein step d. thereof includes presenting some of said information as a voice announcement.

5. The method of claim 1 wherein step c. thereof further comprises consulting a record of recent calls from said calling terminal to determine which among said at least one alternate point of contact had been called recently, and wherein step d. thereof comprises presenting information about any alternate point of contact determined to have been called recently in a manner different from the presentation of information about other alternate points of contact.

6. A system for providing alternate point of contact service in a telecommunications network comprising:
means for receiving a call destined for a called subscriber terminal;
means for determining called subscriber terminal is unavailable;
means for storing information defining a plurality of alternate points of contact for a subscriber associated with said called subscriber terminal;
means for selecting from said storage means information relating to alternate points of contact chosen as of interest in the context of said call;
means for presenting to a user a portion of said selected information relating to alternate points of contact; and
means for extending said call to one of said alternate points of contact.

7. The system of claim 6, further comprising means for receiving from a user a selection from among said alternate points of contact of a particular alternate point of contact to which said call shall be extended.

8. The system of claim 6, further comprising means for processing calls to said called subscriber terminal and wherein said means for storing information defining a plurality of alternate points of contact comprises a data storage facility of said means for processing calls to said called subscriber terminal.

9. The system of claim 6, further comprising means for processing calls from said calling subscriber terminal and wherein said means for storing information defining a plurality of alternate points of contact comprises a data storage facility of said means for processing calls to said calling subscriber terminal.

10. The system of claim 6 wherein said means for storing information defining a plurality of alternate points of contact comprises an intelligent network services control point.
